# EUROPÄISCHE PATENTSCHRIFT

(11) **EP 2 097 298 B1**
(45) Veröffentlichungstag und Bekanntmachung des Hinweises auf die Patenterteilung: **01.12.2010**
(21) Anmeldenummer: 07803346.1
(22) Anmeldetag: 07.09.2007
(51) Int. Cl.: B60S 1/38

(54) **WISCHBLATT**
WIPER BLADE
BALAI D'ESSUIE-GLACE

(30) Priorität: 27.10.2006 DE 102006050815
(43) Veröffentlichungstag der Anmeldung: 09.09.2009
(73) Patentinhaber: Robert Bosch GmbH, 70442 Stuttgart (DE)
(72) Erfinder: AZNAG, Mohamed, 3271 Scherpenheuvel-Zichem (BE)
(86) Internationale Anmeldenummer: PCT/EP2007/059412
(87) Internationale Veröffentlichungsnummer: WO 2008/049686

(56) Entgegenhaltungen:
- EP-A- 1 547 883
- EP-A- 1 800 978
- WO-A-2006/079591
- DE-A1- 10 038 397
- FR-A- 2 755 927
- US-A- 2 687 544
- US-A- 4 063 328

## Beschreibung

### Stand der Technik

Die Erfindung geht von einem Wischblatt nach dem Oberbegriff des Anspruchs 1 aus.

Aus der US 2006/00 267 86 A1 ist ein gattungsgemäßes Wischblatt bekannt, bei dem zwei Federschienen an ihren Enden durch Brücken miteinander verbunden sind, die in der gleichen Ebene wie die Federschienen liegen. Zur Montage einer Wischleiste ist an einem Ende der Spalt zwischen den Federschienen zu einer Montageöffnung erweitert, sodass durch die Montageöffnung eine Rückenleiste der Wischleiste eingefädelt und ein Steg unterhalb der Rückenleiste in den Längsspalt geschoben werden kann. Im mittleren Bereich besitzen die Federschienen vier Befestigungslöcher für ein Anschlusselement zum gelenkigen Verbinden des Wischblatts mit einem Wischarm. Das Anschlusselement besitzt an seinem Boden vier Klauen, die in die Befestigungslöcher passen und bei der Montage so umgebogen werden, dass das Anschlusselement auf den Federschienen fest sitzt. Zu beiden Seiten des Anschlusselements sind auf den Federschienen Spoilerteile aufgesetzt, deren freie Enden durch Endkappen verschlossen sind.

Außerdem ist aus der US 4,063,328 ein Wischblatt mit einem ähnlichen Tragelement bekannt, dessen parallel zueinander verlaufende Federschienen an ihren Enden durch Brücken miteinander verbunden sind und zwischen sich einen Längsschlitz bilden, der den Sitz zur Halterung eines Längsstegs einer Wischleiste darstellt. Diese ist durch eine Öffnung montierbar, die sich im Bereich eines Endes zu beiden Seiten des Schlitzes erstreckt. Bei einem Ausführungsbeispiel sind die Brücken zu Bügeln gebogen, die an der der Wischlippe abgewandten Seite vorstehen und die Kopfleiste hindurchtreten lassen. Das Tragelement ist aus Metall oder einem geeigneten Kunststoff gefertigt.

Ferner ist aus der WO 01/62559 A2 ein Wischblatt mit zwei bandförmigen Federschienen bekannt, die an ihren Enden jeweils durch eine Brücke miteinander verbunden sind. Jede Brücke besitzt zwei Stützfüße, mit denen sie an den Federschienen fest geschweißt ist. Zwischen den Stützfüßen erstreckt sich über einer Rückenleiste einer Wischleiste ein Brückenbogen. Somit kann die Wischleiste mit ihrer Rückenleiste unter dem Brückenbogen in den Längsspalt zwischen den Federschienen geschoben werden. An dem Brückenbogen ist eine Lasche mit einem Haken angeformt, der nach der Montage der Wischleiste in die Rückenleiste gedrückt wird und somit die Wischleiste relativ zu den Federschienen fixiert. Die Brücken und die Laschen sind durch Endkappen abgedeckt. In der Mitte des Wischblatts befindet sich ein Anschlusselement, dessen vier Krallen die Federschienen von oben, von der Seite und von unten umfassen.

### Offenbarung der Erfindung

Mindestens eine Brücke verläuft im Bereich einer Rückenleiste der Wischleiste in einer senkrechten Querebene des Wischblatts auf der der Wischleiste abgewandten Seite versetzt zum Längsspalt. Dadurch kann die Rückenleiste der Wischleiste zwischen der Brücke und dem Ende des Längsspalts über den Längsspalt geschoben werden, sodass ein Steg, der zwischen zwei Längsnuten unterhalb der Rückenleiste angeordnet ist, in den Längsspalt geschoben werden kann. Die Wischleiste ist in das Tragelement leicht zu montieren und wird auf ihrer ganzen Länge bis unmittelbar vor der Brücke im Längsspalt geführt. Dadurch ergeben sich auf der gesamten Länge des Wischblatts gute Wischverhältnisse. Außerdem kann das Tragelement in einem wirtschaftlichen Fertigungsverfahren hergestellt werden.

Dabei kann mindestens eine Brücke des Tragelements den Zwischenraum zwischen den Federschienen mit einem Brückenbogen überbrücken, sodass die Rückenleiste unter dem Brückenbogen durch über den Längsspalt geschoben werden kann und die Federschienen in Längsnuten der Wischleiste eingreifen. Das Tragelement besitzt nach der Erfindung mindestens an einem Ende des Längsspalts einen quer verlaufenden Einschnitt, der den Brückenbogen von einem Teil der Federschienen trennt. Die Länge des Einschnitts wird durch die Breite der Rückenleiste bestimmt, sodass sich nach der endgültigen Verformung des Brückenbogens, z.B. durch Pressen oder Prägen, ein ausreichender Montagespielraum ergibt.

Eine andere Möglichkeit, einen Brückenbogen zu fertigen, besteht darin, dass das Tragelement aus Kunststoff in einem Spritzgießverfahren hergestellt wird. Dabei können zur besseren Druckverteilung in Längsrichtung des Wischblatts bandförmige Federschienen aus Federstahl als Einsatzteile eingespritzt sein. Die Form der Brückenbögen wird durch die Spritzgussform vorgegeben. Nach einem weiteren Ausführungsbeispiel werden mindestens an einem Ende des Längsspalts vor der Brücke durch parallel zum Längsspalt verlaufende Einschnitte und einen dazu quer verlaufenden Einschnitt Lappen gebildet, die zur Wischleiste hin gebogen sind, sodass zwischen der Brücke und den freien Enden der Lappen ein ausreichender Zwischenraum zur Montage der Wischleiste entsteht. Bei dieser Alternativen verläuft die Brücke im Wesentlichen in der gleichen Ebene wie die Federschienen, während die Lappen an ihren freien Enden zur Wischleiste hin einen ausreichenden Montagespielraum für die Wischleiste bilden.

Gemäß einer weiteren Ausgestaltung der Erfindung sind im mittleren Bereich der Federschienen Öffnungen vorgesehen, in die ein Anschlusselement zum gelenkigen Verbinden mit einem Wischarm mittels Federhaken eingeklippst ist. Somit kann das Anschlusselement schnell und ohne Sonderwerkzeuge montiert und demontiert werden. Das Anschlusselement kann ein Spritzgussteil aus Kunststoff sein oder aus Blech gefertigt werden, wobei die Federhaken aus einem Boden des Anschlusselements ausgeklinkt und in eine Ebene etwa senkrecht zum Boden gebogen werden. Um bei kurzen Federhaken einen ausreichenden Federweg für eine sichere Verrastung zu erhalten, ist es zweckmäßig, dass je Öffnung zwei Federhaken vorgesehen sind, deren Nocken auf den voneinander abgewandten Seiten der Federhaken angeordnet sind und in Längsrichtung der Federschienen weisen.

Wird das Tragelement im Spritzgießverfahren aus Kunststoff gefertigt, ist es zweckmäßig, dass das Anschlusselement ebenfalls im Spritzgießverfahren mit dem Tragelement einstückig verbunden wird. Dabei kann zur größeren Festigkeit und Steifigkeit des Anschlusselements ein Einsatzteil aus Blech gefertigt werden und im Spritzgießverfahren mit dem Tragelement verbunden werden.

Um den Anpressdruck durch den Fahrtwind auf das Wischblatt zu erhöhen, wird zweckmäßigerweise ein zweiteiliger Spoiler vorgesehen, dessen Teile auf das Tragelement aufgesetzt sind. Die Teile des Spoilers reichen bis zum Anschlusselement und sind an ihren freien Enden mit Endkappen verschlossen. Die Endkappen sind zweckmäßigerweise in den Teilen des Spoilers integriert, die ebenfalls im Spritzgießverfahren hergestellt werden. Dabei können Standardlängen vorgegeben werden, die je nach Anwendung auf die korrekte Länge zugeschnitten werden.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Tragelements eines Wischblatts,
- Fig. 2: eine Variante zu Fig. 1,
- Fig. 3: eine perspektivische Ansicht eines Anschlusselements,

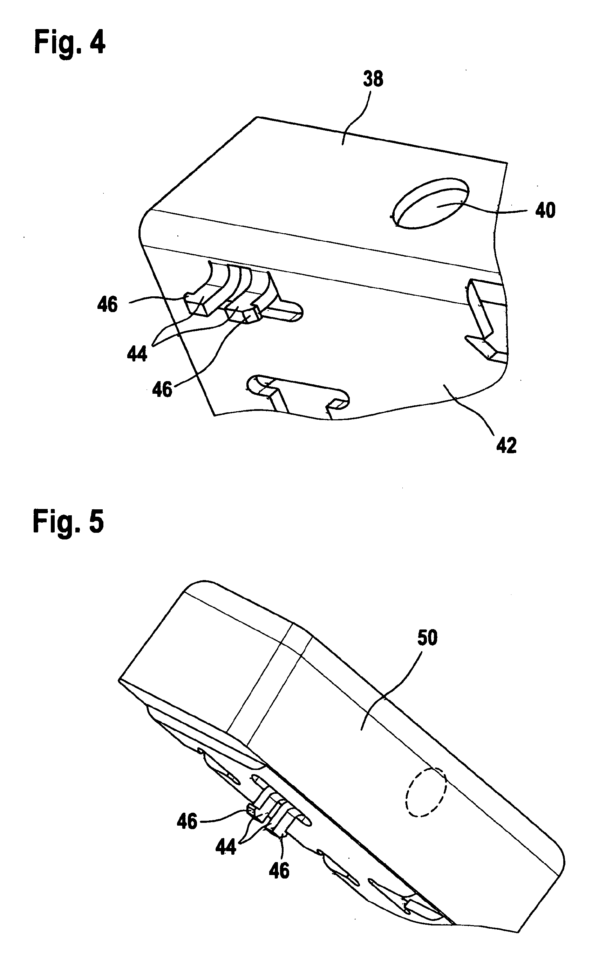

- Fig. 4: eine perspektivische Teilansicht eines Anschlussele- ments nach Fig. 3 von unten,
- Fig. 5: eine perspektivische Ansicht eines Anschlusseleanents nach Fig. 4. mit einer Kappe,

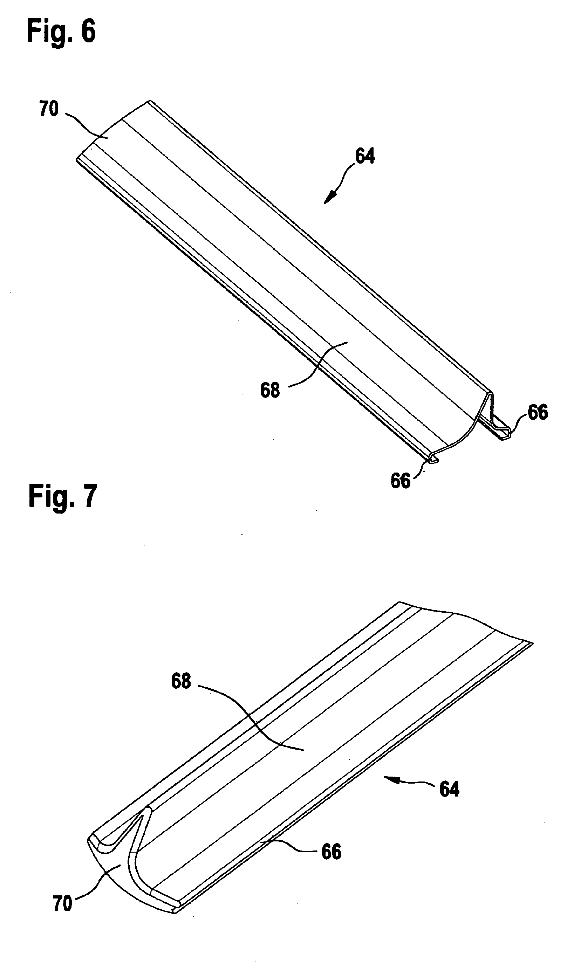

- Fig. 6: eine perspektivische Ansicht eines Spoilerteils mit integrierter Endkappe,
- Fig. 7: eine perspektivische Ansicht nach Fig. 6 aus einer an- deren Richtung,
- Fig. 8: eine perspektivische Teilansicht eines Tragelements mit einem integrierten Anschlusselement,
- Fig. 9: eine perspektivische Teilansicht eines Wischblatts mit einem Tragelement nach Fig. 8,
- Fig. 10: eine Teilansicht eines Wischblatts nach Fig. 9 mit einem Spoiler,
- Fig. 11: eine Teilansicht eines Spoilers nach Fig. 10 mit ei- ner Endkappe und
- Fig. 12: eine Teilansicht eines Wischblatts nach Fig. 9 mit einer Kappe für das Anschlusselement.

### Ausführungsformen der Erfindung

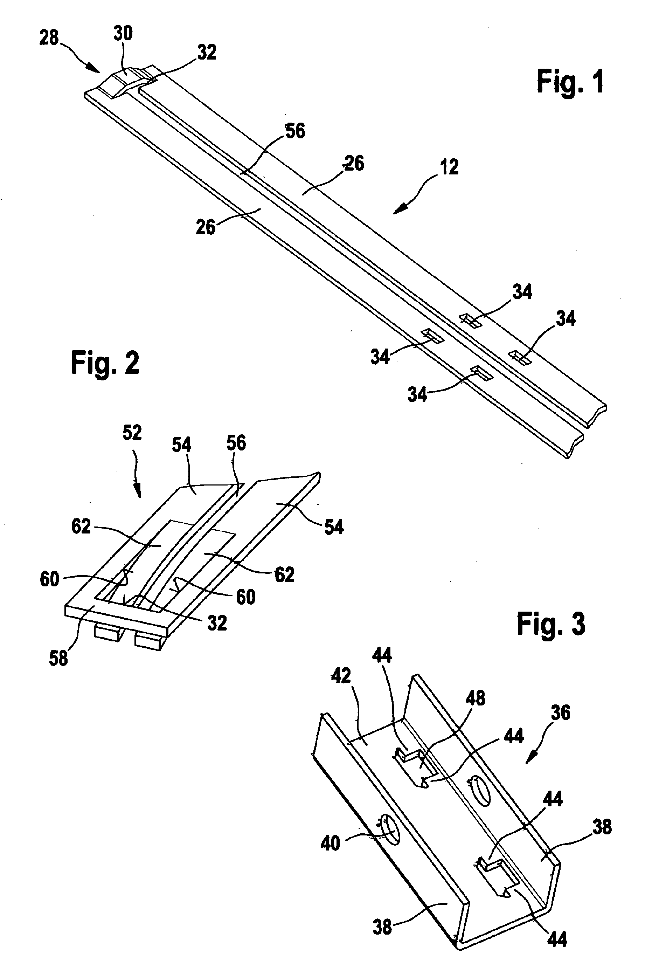

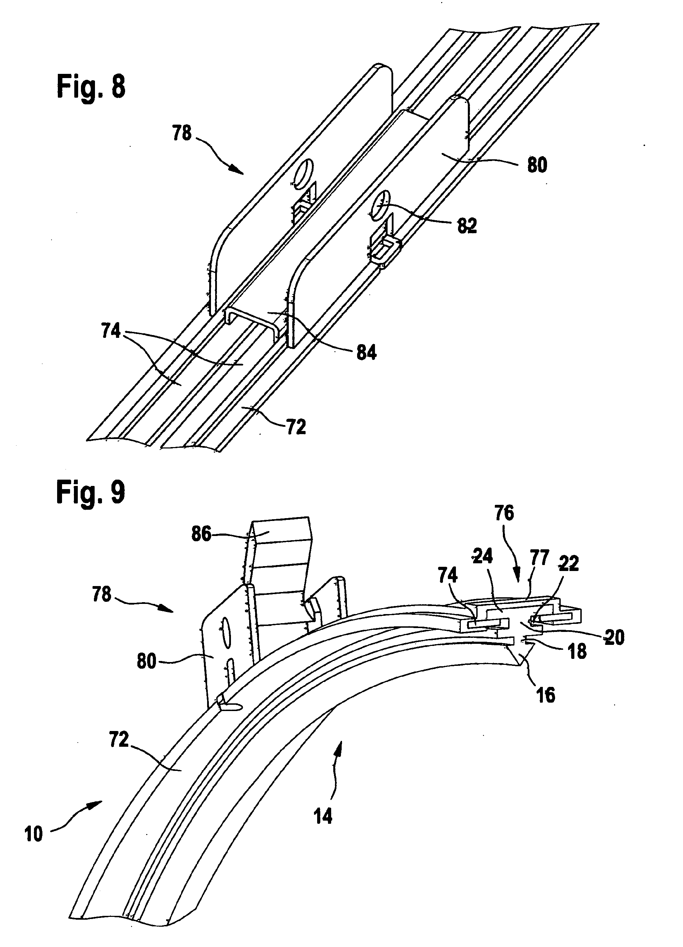

In Fig. 1 ist ein Tragelement 12 für ein Wischblatt 10 dargestellt. Obwohl das Tragelement 12 auch aus Kunststoff gefertigt sein kann, wird es zweckmäßigerweise aus einem Federstahlblech in einem Stanz- und Biegeverfahren hergestellt. Dabei wird das Tragelement 12 aus einer Blechplatte gestanzt und in einem Arbeitsgang mit einem Längsspalt 56 sowie Öffnungen 34 im mittleren Bereich versehen. Der Längsspalt 56 wird an seinen Enden durch einen quer verlaufenden Einschnitt 32 begrenzt. Die durch den Längsspalt 56 getrennten Teile des Tragelements 12 bilden Federschienen 26, wie an ihren Enden durch Brücken 28 miteinander verbunden sind. Von den Brücken 28 ist mindestens eine mit einem Brückenbogen 30 versehen, sodass die Brücke 28 im Bereich einer Rückenleiste 24 einer Wischleiste 14 (Fig. 9) in einer senkrechten Querebene des Wischblatts 10 auf der der Wischleiste 14 abgewandten Seite versetzt zum Längsspalt 56 verläuft. Die Verformung der Brücke 28 wird durch den Einschnitt 32 ermöglicht, der in seiner Länge auf die Breite der Rückenleiste 24 abgestimmt ist.

Die Wischleiste 14 besitzt eine Wischlippe 16, die über einen Kippsteg 18 mit einer Kopfleiste 20 verbunden ist. Diese hat zwei einander gegenüberliegende Längsnuten 22, die die Rückenleiste 24 von dem übrigen Teil der Kopfleiste 20 abgrenzen und zwischen sich einen Steg bilden.

Die Wischleiste 14 wird in das Tragelement 12 eingesetzt, indem die Rückenleiste 24 zwischen dem Brückenbogen 30 und dem Längsspalt 56 über die Federschienen 26 geschoben wird, sodass die Federschienen 26 in die Längsnuten 22 eingreifen. Nach der Montage der Wischleiste 14 wird ein Anschlusselement 36 zum gelenkigen Verbinden mit einem Wischarm 86 mit dem Tragelement 12 fest verbunden, indem es mittels Federhaken 44 mit Nocken 46 in die Öffnungen 34 der Federschienen 26 eingeklippst wird. Das Anschlusselement 36 besitzt Seitenwangen 38. An diesen sind Lagerelemente 40 in Form von Lagerbohrungen, Lagerzapfen oder Lagerbolzen vorgesehen. Aus einem Boden 42 des Anschlusselements 36 sind die Federhaken 44 mit den Nocken 46 ausgeklinkt, wobei die Federhaken 44 mit einer Seite mit dem Boden 42 verbunden bleiben. Je Öffnung 34 in den Federschienen 26 (Fig. 1) sind zwei Federhaken 44 vorgesehen, die etwa senkrecht zum Boden 42 umgebogen sind und deren Nocken 46 voneinander abgewandt sind und in Längsrichtung der Federschienen 26 weisen. Durch das Ausklinken der Federhaken 44 mit den Nocken 46 entstehen im Boden 42 Öffnungen 48.

Bei der Montage des Anschlusselements 36 wird die Rückenleiste 24 gegen den Boden 42 und die Federschienen 26 gepresst, sodass die Wischleiste 14 in Längsrichtung der Federschienen 26 gesichert ist. Die Längssicherung kann durch Vorsprünge, Spitzen oder dgl. verstärkt werden, die am Boden 42 angeordnet sein können, und während der Montage in die Rückenleiste 24 eindringen. Nach der Montage des Anschlusselements 36 wird dieses durch eine Kappe 50 abgedeckt, ohne dass die Gelenkfunktion zwischen dem Wischblatt 10 und dem Wischarm 86 behindert wird.

Das Ausführungsbeispiel nach Fig. 2 zeigt ein Tragelement 52 mit einem Längsspalt 56, zu dessen Längsseiten Federschienen 54 angeordnet sind. Diese sind durch eine Brücke 58 miteinander verbunden. Die Brücke 58 ist durch einen quer zum Längsspalt 56 verlaufenden Einschnitt 32 teilweise von den Federschienen 54 getrennt. Der Einschnitt 32 begrenzt Lappen 62, die durch Einschnitte 60 parallel zum Längsspalt 56 aus den Federschienen 54 ausgeklinkt sind. Die Lappen 62 sind an dem Ende, das dem Einschnitt 32 gegenüberliegt, mit den Federschienen 54 verbunden und an den gegenüberliegenden Enden in Richtung der Wischleiste 14 von der Brücke 58 weg gebogen. Dadurch entsteht zwischen der Brücke 58 und den Lappen 62 ein Zwischenraum, durch den die Rückenleiste 24 über die Lappen 62 und die Federschienen 54 geschoben werden kann, sodass die Lappen 62 und die Federschienen 54 in die Längsnuten 22 der Kopfleiste 20 eingreifen.

Auf die Federschienen 26, 54 der Tragelemente 12, 52 können Teile eines Spoilers 64 mit einem Spoilerprofil 68 und Führungsschienen 66 montiert werden. Die Spoilerteile 64 besitzen an einem Ende eine integrierte Endkappe 70. Sie werden in einem Spritzgießverfahren in standardisierten Längen hergestellt und werden je nach Anwendung an der zum Anschlusselement 36 weisenden Ende auf die erforderliche Länge geschnitten.

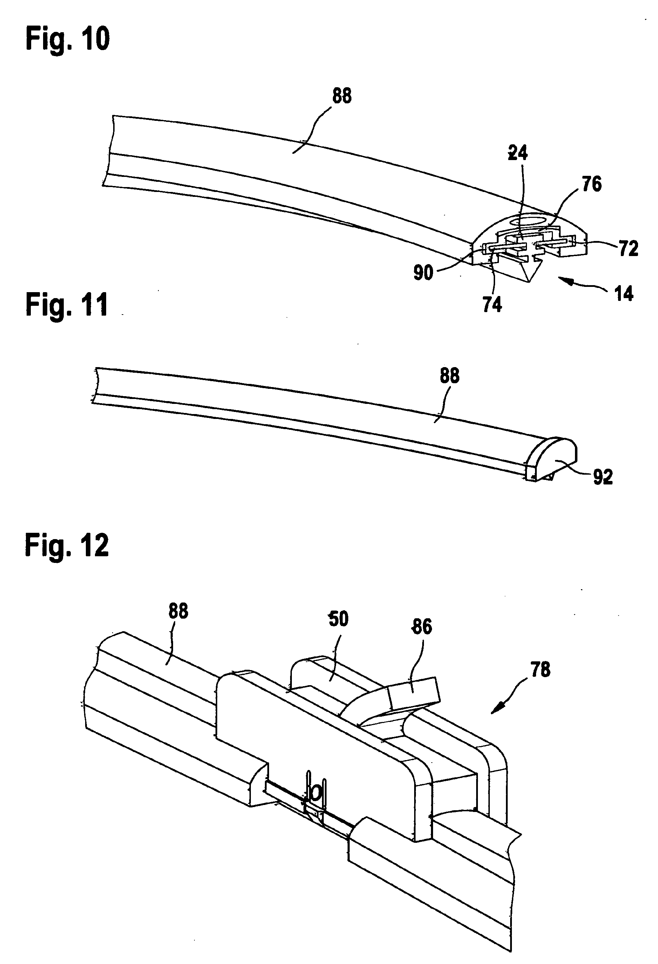

Bei dem Ausführungsbeispiel nach Fig. 8 bis 12 ist ein Tragelement 72 im Spritzgießverfahren hergestellt. Es besitzt Federschienen 74 aus Federstahl, die als Einsatzteile im Spritzgießverfahren mit dem Tragelement 72 verbunden sind und mit ihren nach innen vorstehenden Teilen in die Längsnuten 22 der Kopfleiste 20 der Wischleiste 14 eingreifen. Die beiden Federschienen 74 sind an ihren Enden durch eine Brücke 76 miteinander verbunden. Diese besitzt einen Brückenbogen 77, sodass die Rückenleiste 24 unter dem Brückenbogen 77 über die Federschienen 74 geschoben werden kann.

Im gleichen Spritzgießverfahren kann ein Anschlusselement 78 zum gelenkigen Verbinden des Wischblatts 10 mit einem Wischarm 86 mit dem Tragelement 72 verbunden werden. Hierzu wird das aus Blech gefertigte Anschlusselement 78 als Einsatzteil in die Spritzgussform eingesetzt. Das Anschlusselement 78 besitzt Seitenwangen 80, die durch einen brückenförmigen Boden 84 auf der Seite der Wischleiste 14 miteinander verbunden sind. An den Seitenwangen 80 sind Lagerelemente 82 in Form von Lagerbohrungen, Lagerzapfen, Lagerbolzen oder dgl. vorgesehen.

Auf das Tragelement 72 ist ein Spoiler 88 in Flachbauweise mittels Führungsnuten 90 aufgesetzt. Er wird zweckmäßigerweise zweiteilig ausgeführt, wobei die Teile bis zum Anschlusselement 78 reichen und ihre freien Enden durch Endkappen 92 verschlossen sind.

## Patentansprüche

1. Wischblatt (10) mit einem federelastischen, bandförmigen Tragelement (12, 52, 72), das zur Aufnahme einer Wischleiste (14) einen Längsspalt (56) zwischen zwei parallel verlaufenden Federschienen (26, 54, 74) des Tragelements (12, 52, 72) aufweist, die an ihren Enden jeweils durch eine Brücke (28, 58, 76) einstückig aus einer Blechplatte gestanzt miteinander verbunden und im unbelasteten Zustand zur Wischleiste (14) konkav gekrümmt sind, wobei mindestens eine Brücke (28, 58, 76) im Bereich einer Rückenleiste (24) der Wischleiste (14) in einer senkrechten Querebene des Wischblatts (10) verläuft, die auf der der Wischhleiste (14) abgewandten Seite relativ zum Längsspalt (56) versetzt ist, sodass die Brücke (28,76) des Tragelements (12, 72) den Zwischenraum zwischen den Federschienen (26, 54, 74) mit einem Brückenbogen (30, 77) überbrückt, **dadurch gekennzeichnet, dass** das Tragelement (12) aus einen Federstahlblech geformt ist, wobei mindestens an einem Ende des Längsspalts (56) ein quer verlaufender Einschnitt (32) vorgesehen ist, der den Brückenbogen (30) von den Federschienen (26) trennt.

2. Wischblatt (10) nach Anspruch 1, **dadurch gekennzeichnet, dass** mindestens an einem Ende des Längsspalts (56) vor der Brücke (58) durch parallel zum Längsspalt (56) verlaufende Einschnitte (60) und einen quer verlaufenden Einschnitt (32) Lappen (62) gebildet werden, die zur Wischleiste (14) hin gebogen sind, sodass zwischen der Brücke (58) und den freien Enden der Lappen (62) ein ausreichender Zwischenraum zur Montage der Wischleiste (14) entsteht.

3. Wischblatt (10) nach einem der vorhergehenden Ansprüche, **dadurch gekennzeichnet, dass** im mittleren Bereich der Federschienen (26, 54) Öffnungen (34) vorgesehen sind, in die ein Anschlusselement (36) zum gelenkigen Verbinden mit einem Wischarm (86) mittels Federhaken (44) eingeklippst ist.

4. Wischblatt (10) nach Anspruch 3, **dadurch gekennzeichnet, dass** das Anschlusselement (36) aus Blech gefertigt ist und die Federhaken (44) aus einem Boden (42) des Anschlusselements (36) ausgeklinkt und in eine Ebene etwa senkrecht zum Boden (42) gebogen sind.

5. Wischblatt (10) nach Anspruch 4, **dadurch gekennzeichnet, dass** je Öffnung (34) zwei Federhaken (44) vorgesehen sind, deren Nocken (46) auf den voneinander abgewandten Seiten der Federhaken (44) angeordnet sind und in Längsrichtung der Federschienen (26, 54) weisen.

6. Wischblatt (10) nach Anspruch 1, **dadurch gekennzeichnet, dass** das Tragelement (72) mit den Brücken (76) aus Kunststoff in einen Spritzgießverfahren gefertigt ist, wobei die Federschienen (74) aus Federstahl als Einsatzteile eingespritzt sind.

7. Wischblatt (10) nach Ansprüches 3 und 6, **dadurch gekennzeichnet, dass** das Anschlusselement (78) aus Blech gefertigt ist und als Einsatzteil im Spritzgießverfahren mit dem Tragelement (72) verbunden wird.

8. Wischblatt (10) nach einem der Ansprüche 3 bis 7, **dadurch gekennzeichnet, dass** auf das Tragelement (12, 52, 72) Teile eines Spoilers (64, 88) aufgesetzt sind, deren freie Enden mit Endkappen (70, 92) verschlossen sind.

9. Wischblatt (10) nach Anspruch 8, **dadurch gekennzeichnet, dass** die Endkappe (70) in dem Teil des Spoilers (64) integriert ist.

## Claims

1. Wiper blade (10) with a spring-elastic, band-shaped supporting element (12, 52, 72) which, in order to receive a wiper strip (14), has a longitudinal gap (56) between two parallel spring rails (26, 54, 74) of the supporting element (12, 52, 72), said spring rails being connected to each other at the ends thereof by a respective bridge (28, 58, 76), punched as a single piece from a sheet-metal plate, and, in the unloaded state, being curved concavely with respect to the wiper strip (14), wherein at least one bridge (28, 58, 76) in the region of a back strip (24) of the wiper strip (14) runs in a vertical transverse plane of the wiper blade (10), which transverse plane is offset relative to the longitudinal gap (56) on the side facing away from the wiper strip (14), and therefore the bridge (28, 76) of the supporting element (12, 72) spans the intermediate space between the spring rails (26, 54, 74) with a bridge arch (30, 77), **characterized in that** the supporting element (12) is formed from a spring steel sheet, an incision (32) which runs transversely and separates the bridge arch (30) from the spring rails (26) being provided at least at one end of the longitudinal gap (56).

2. Wiper blade (10) according to Claim 1, **characterized in that** tabs (62) are formed at least at one end of the longitudinal gap (56) in front of the bridge (58) by means of incisions (60) running parallel to the longitudinal gap (56) and an incision (32) running transversely, said tabs being bent towards the wiper strip (14), and therefore a sufficient intermediate space for the installation of the wiper strip (14) is produced between the bridge (58) and the free ends of the tabs (62).

3. Wiper blade (10) according to one of the preceding claims, **characterized in that** openings (34) into which a connecting element (36) for the articulated connection to a wiper arm (86) is clipped by means of spring hooks (44) are provided in the central region of the spring rails (26, 54).

4. Wiper blade (10) according to Claim 3, **characterized in that** the connecting element (36) is manufactured from sheet metal, and the spring hooks (44) are released from a base (42) of the connecting element (36) and bent into a plane approximately perpendicularly to the base (42).

5. Wiper blade (10) according to Claim 4, **characterized in that** two spring hooks (44) are provided per opening (34), the cams (46) of which spring hooks are arranged on mutually remote sides of the spring hooks (44) and point in the longitudinal direction of the spring rails (26, 54).

6. Wiper blade (10) according to Claim 1, **characterized in that** the supporting element (72) together with the bridges (76) is manufactured from plastic by injection moulding, the spring rails (74) made from spring steel being injected as inserts.

7. Wiper blade (10) according to Claims 3 and 6, **characterized in that** the connecting element (78) is manufactured from sheet metal and is connected to the supporting element (72) as an insert by injection moulding.

8. Wiper blade (10) according to one of Claims 3 to 7, **characterized in that** parts of a spoiler (64, 88), the free ends of which parts are closed by end caps (70, 92), are placed onto the supporting element (12, 52, 72).

9. Wiper blade (10) according to Claim 8, **characterized in that** the end cap (70) is integrated in the part of the spoiler (64).

## Revendications

1. Raclette d'essuie-glace (10) avec un élément de support (12, 52, 72) en forme de bande, faisant ressort et qui, pour recevoir une réglette d'essuie-glace (14), présente une fente longitudinale (56) entre deux lames-ressorts (26, 54, 74) s'étendant en parallèle de l'élément de support (12, 52, 72) et qui sont reliées ensemble respectivement au niveau de leurs extrémités par un pont (28, 58, 76) découpé d'une seule pièce dans une plaque de tôle, et qui, à l'état non sollicité, sont courbées de façon concave par rapport à la réglette d'essuie-glace (14), au moins un pont (28, 58, 76) s'étendant dans la zone d'une réglette arrière (24) de la réglette d'essuie-glace (14) dans un plan transversal vertical de la raclette d'essuie-glace (10), qui, du côté détourné de la réglette d'essuie-glace (14), est décalé par rapport à la fente longitudinale (56), de sorte que le pont (28, 76) de l'élément de support (12, 72) couvre l'espace intermédiaire entre les lames-ressorts (26, 54, 74) par une voûte de pont (30, 77), **caractérisée en ce que** l'élément de support (12) est formé à partir d'une tôle d'acier à ressort, une encoche (32) s'étendant transversalement étant prévue à au moins une extrémité de la fente longitudinale (56), laquelle encoche sépare la voûte de pont (30) des lames-ressorts (26).

2. Raclette d'essuie-glace (10) selon la revendication 1, **caractérisée en ce qu'**à au moins une extrémité de la fente longitudinale (56) devant le pont (58), des encoches (60) s'étendant en parallèle à la fente longitudinale (56) et une encoche (32) s'étendant transversalement forment des pattes (62) courbées vers la réglette d'essuie-glace (14), de sorte qu'entre le pont (58) et les extrémités libres des pattes (62) un espace intermédiaire suffisant pour le montage de la réglette d'essuie-glace (14) est créé.

3. Raclette d'essuie-glace (10) selon l'une quelconque des revendications précédentes, **caractérisée en ce que** dans la zone centrale des lames-ressorts (26, 54), des ouvertures (34) sont prévues dans lesquelles est encliqueté un élément de raccordement (36) pour une connexion articulée avec un bras d'essuie-glace (86) au moyen de crochets à ressort (44).

4. Raclette d'essuie-glace (10) selon la revendication 3, **caractérisée en ce que** l'élément de raccordement (36) est réalisé en tôle, et les crochets à ressort (44) sont décrochés d'un fond (42) de l'élément de raccordement (36) et pliés dans un plan approximativement vertical au fond (42).

5. Raclette d'essuie-glace (10) selon la revendication 4, **caractérisée en ce que** pour chaque ouverture (34), deux crochets à ressort (44) sont prévus dont les cames (46) sont disposées sur les côtés détournés l'un de l'autre des crochets à ressort (44) et sont orientées dans la direction longitudinale des lames-ressorts (26, 54).

6. Raclette d'essuie-glace (10) selon la revendication 1, **caractérisée en ce que** l'élément de support (72) est réalisé avec les ponts (76) en matière plastique par un procédé de moulage par injection, dans laquelle les lames-ressorts (74) en acier à ressort sont injectées sous forme d'inserts.

7. Raclette d'essuie-glace (10) selon les revendications 3 et 6, **caractérisée en ce que** l'élément de raccordement (78) est réalisé en tôle et est relié à l'élément de support (72) sous forme d'insert par le procédé de moulage par injection.

8. Raclette d'essuie-glace (10) selon l'une quelconque des revendications 3 à 7, **caractérisée en ce que** sur l'élément de support (12, 52, 72), des parties d'un déflecteur (64, 88) sont posées, les extrémités libres de celles-ci étant obturées par des bouchons de terminaison (70, 92).

9. Raclette d'essuie-glace (10) selon la revendication 8, **caractérisée en ce que** le bouchon de terminaison (70) est intégré dans la partie du déflecteur (64).
